# EUROPEAN PATENT SPECIFICATION

(11) **EP 0 589 580 B1**
(45) Date of publication and mention of the grant of the patent: **12.03.1997**
(21) Application number: 93306957.7
(22) Date of filing: 02.09.1993
(51) Int. Cl.: B23P 15/00, F01L 1/24, B21H 7/18

(54) **Method for manufacturing a direct acting hydraulic tappet**
Verfahren zur Herstellung eines direktwirkender Ventilstössels
Procédé pour fabriquer un poissoir hydraulique à action directe

(30) Priority: 23.09.1992 US 950534
(43) Date of publication of application: 30.03.1994
(73) Proprietor: EATON CORPORATION, Cleveland, Ohio 44114 (US)
(72) Inventor: Groh, David Michael, Battle Creek, Michigan 48706 (US); Kaniut, Chris Paul, Battle Creek, Michigan 49017 (US); Worthington, Steven Lee, Battle Creek, Michigan 49017 (US); Uitvlugt, Martin William, Battle Creek, Michigan 49017 (US); Johnson, Scott Charles, Marshall, Michigan 49068 (US)
(74) Representative: Douglas, John Andrew

(56) References cited:
- EP-A- 0 335 121
- DE-A- 3 409 236
- GB-A- 2 014 072
- US-A- 4 590 898
- PATENT ABSTRACTS OF JAPAN vol. 10, no. 216 (M-502)29 July 1986 & JP-A-61 055 306 (RIKEN) 19 March 1986
- PATENT ABSTRACTS OF JAPAN vol. 10, no. 385 (M-548)24 December 1986 & JP-A-61 175 204 (RIKEN) 6 August 1986
- MTZ - MOTORTECHNISCHE ZEITSCHRIFT vol. 49, no. 3 , March 1988 , STUTTGART DE pages 91 - 94 XP000020084 BURGER 'Laseranwendungen im Automobil- und Motorenbau'
- WELDING AND METAL FABRICATION vol. 42, no. 4 , April 1974 , HAYWARDS HEATH GB pages 125 - 130 FRÜNGEL ET AL 'Ultra-pulse welding'

## Description

The present invention relates generally to direct acting hydraulic tappets and specifically to a method for manufacturing such tappets. Such a method according to the preamble of claim 1 is described for example in JP-A-61055306.

In the manufacture of direct acting hydraulic tappets, customarily referred to as "bucket tappets," the structure shown in U.S. Patent No. 4,590,898 to Buente et al, which is assigned to the assignee of this invention and incorporated herein by reference, has become universally accepted as a preferred structure, particularly in the way in which the hydraulic element is supported with respect to the tappet body. In this structure, the hydraulic element is supported by a web and hub structure wherein a web extends inward from the tubular body and wherein a hub formed integrally with the web supports the hydraulic element.

Since the adoption of the above design, efforts have been made to improve the structure in terms of reduced weight, enhanced manufacturability, and material improvements. One such effort is shown in U.S. Patent No. 4,602,409 to Schaeffler which discloses a cup-shaped, one-piece body with a web and hub element which is welded in place. Other known designs include a one piece body element with the web and hub structure fixed thereto by swaging or by some other known metal deformation process.

In all of the above designs, an important requirement is that the joint between the body element and the web and hub element be sealed.

Welding is the most reliable means for forming this joint for structural rigidity considerations as well as for sealing; however, there are certain problems associated with the welding process and subsequent heat treating processes. Generally, heat treatments which include quenching of previously assembled parts can result in problems with distortion, higher scrap and re-work, cleaning and drag out of quenching fluids. As a result, additional operations may be required, thus increasing product cost.

Another factor to be considered is that in some applications it is beneficial to add an oil flow affecting element such as a baffle to the internal structure of the tappet. This further complicates the ability to clean the assembly after heat treatment.

If the assembly is heat treated after welding, the cleaning process is even more difficult than if no baffle is used.

If the assembly is welded after heat treating using conventional welding techniques, it is necessary to use barriers or stopoff techniques prior to heat treatment in order to obtain a satisfactory weld joint. Such stopoff techniques prevent carbon and nitrogen from penetrating the surface of the part to permit conventional welding operations to be performed. These techniques, however, are time consuming, making their feasibility in high volume production questionable.

It is an object of the present invention to provide an improved body assembly for a direct acting hydraulic tappet of the type wherein a web and hub structure is welded to a one-piece, cup-shaped body element.

It is further an object to provide a method for manufacturing such a body assembly including optimizing the geometry of the elements in the area of the weld joint and optimizing the process associated with preparing the parts for welding and for optimizing the welding process per se.

Other objects and advantages of the invention will be apparent from the following description when considered in connection with the accompanying drawings, wherein:
**Fig. 1** is a cross-sectional view of a direct acting tappet constructed in accordance with the invention;
**Fig. 2A** is a sectional view of the tappet body;
**Fig. 2B** is an enlargement of a portion of **Fig. 2A**;
**Fig. 3** is a schematic illustration of a prior art method for forming an oil groove in a tappet body;
**Fig. 4** is a schematic illustration of a method for forming an oil groove in a tappet body in accordance with the invention;
**Fig. 5** is a sectional view of a web and hub assembly prior to assembly; and
**Fig. 6** is a photomicrograph of a weld produced in accordance with the invention.

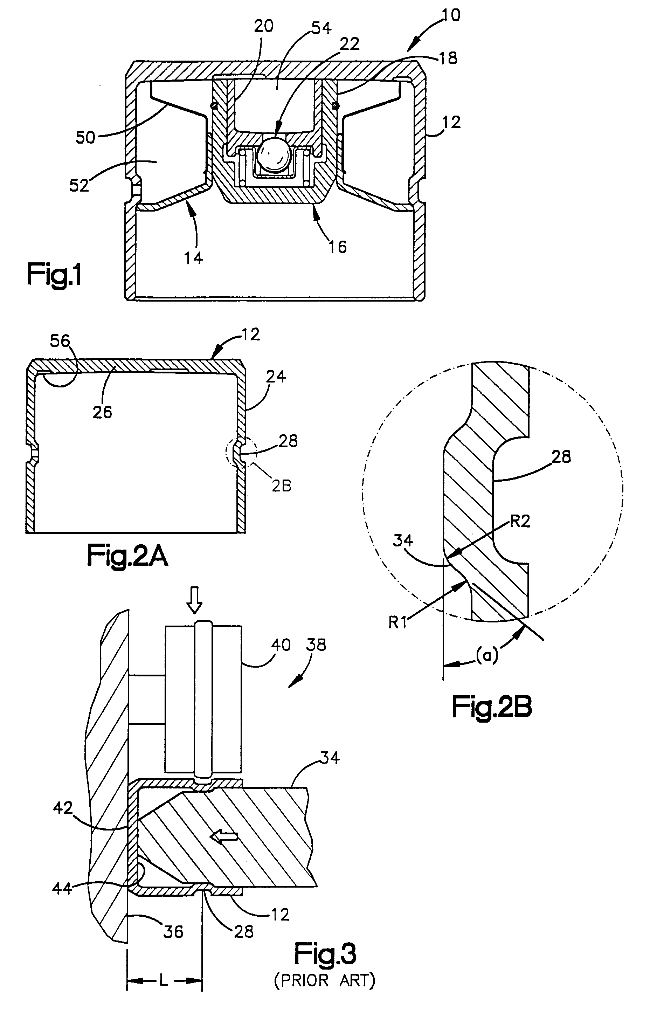

Referring to **Fig. 1**, there is illustrated a direct acting hydraulic tappet **10** comprising a cup-shaped body **12**, a web and hub element **14**, and a hydraulic assembly **16**. The hydraulic assembly per se is not part of the present invention, and typically comprises a plunger **18** in sliding engagement with the hub portion of the web and hub element, a piston **20** in sliding engagement with the plunger, and a check valve assembly **22**.

Referring to **Figs. 2A** and **2B**, the body **12** is formed of a hardenable alloyed steel such as SAE-5120 by a forging process which produces a very lightweight body having a thin wall section **24** and a relatively thicker top or cam face portion **26**. An oil groove **28** is formed by a rolling process as will be described in more detail below, which process also forms the interior of the body in a configuration which significantly enhances the weld joint between the web and hub assembly **14** and the body. Referring particularly to **Fig. 2B,** the surface designated **34** defines the interface between the web and hub **14** and the body, and it has been determined that an optimum weld joint can be obtained if the angle designated **(a)** of the interface is maintained at 44° ± 2 degrees, the radius designated **R1** is 12.7 mm (.5 in.) ± 6.35 mm (.25 in.), and the radius designated **R2** is 25.4 mm (1.0 in.) ± 6.35 mm (.25 in.).

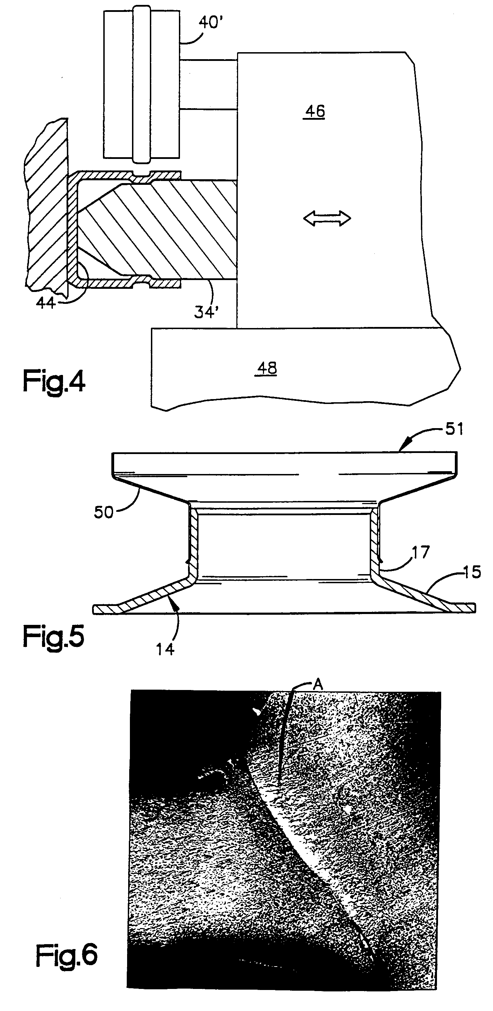

The above weld interface geometry is obtained using a novel rolling process illustrated schematically in **Fig. 4**, with a prior art process illustrated schematically in **Fig. 3** for comparison.

**Fig. 3** illustrates a prior art method for forming the oil groove **28** and the weld interface in the body **12**. In this method, a mandrel **34** is inserted into the body, and the body is located independently of the mandrel with the outer surface **42** of the body located in relation to a reference line **36**, after which a grooving tool **40** is forced into engagement with the body **12** while the body is rotated. Using this method the distance L between the cam face of the lifter body and the center of the oil groove is located off the outer surface of the cam face portion of the body while the inside contour, which is specifically adapted to define the weld interface described above, is determined by the shape of the mandrel, which locates off the inner surface of the cam face. Because there can be significant variation in the face thickness, this can produce inconsistencies in the groove and weld interface locations.

In the improved method illustrated in **Fig. 4**, the groove and weld interface characteristics are both located off the inner surface of the cam face. This is accomplished by means of rolling equipment **38**' in which the mandrel **34**' and the grooving tool **40**' are mounted on a single slide **46** which is linearly movable in the direction of the double arrow relative to a base member **48**, and wherein the mandrel rotates about its longitudinal axis. Using this method, the oil groove defined by the shape of the grooving tool and the weld interface defined by the mandrel are both located off the inner surface **44** of the body and will thus be consistent regardless of variations in cam face thickness.

Referring to **Figs. 1** and **5**, as referred to above, in certain applications of bucket tappets it is beneficial to include a baffle **50** in the secondary oil reservoir **52** of the tappet so that oil drainage is inhibited when the engine is not running. Prior art baffle designs which are generally welded or otherwise fixed rigidly in place, can be relatively heavy, and do not extend to the full height of the secondary reservoir.

In accordance with the present invention, the baffle **50** is very thin, preferably 0.25 mm ± 0.025 mm and is press fit onto the hub portion **17** of the web and hub element **14**, to form an assembly designated **51**. The baffle **50** is initially only partially pressed onto the assembly **51** such that the height of the partially assembled web and hub and baffle assembly is greater than the distance between the weld interface against which the web is located and the inner surface **44**. When the web and hub and baffle assembly is positioned for welding, the process of fixturing the assembly for welding will cause the baffle **50** to be positioned against the surface **44** of the body regardless of variations in location, thicknesses and tolerance stackups.

In accordance with a further aspect of the invention, an oil flowpath over the top of the baffle is defined by forming a depression **56** in the surface **44**, which depression can be formed during the body forging process and which is located so that it intersects the top surface of the baffle. The positioning of the baffle against the inner surface of the body and providing a flowpath above the baffle maximizes the volume of the secondary reservoir.

In accordance with the invention, the web and hub element **14** is preferably formed of a medium carbon steel such as SAE 1050 and the body only is heat treated prior to assembly. It is understood, however, that other heat treatable ferrous materials can be used. The heat treatment process per se is not part of the present invention; however, any well known surface hardening such as carbonitriding or carburizing can be used.

As discussed above, heretofore it has not been considered to be desirable to weld after heat treatment without using time-consuming masking procedures, because the heat treat method can have adverse effects on the welding process. The capacitive discharge (CD) welding process is tolerant of many hardening processes while maintaining weld integrity and this is a preferred method for fixing the web and hub element to the body.

Once the assembly of the web and hub element to the body is completed, the assembly is placed in a suitable fixture and the area of the interface **34** of the web and hub with the body is subjected to a capacitive discharge (CD) welding process. The CD welding process is well known in the art and won't be discussed herein in detail; however, the use of this specific process in the present application is significant in several respects and thus warrants some discussion.

In the CD welding process, the welding energy is produced by a high speed, short duration electrical discharge of previously energized capacitors. The sudden discharge of energy liquifies the metal at the weld interface in a very localized area. The weld discharge time is typically less than 10 milliseconds; therefore, very little heating occurs outside the weld area. Also, because of the extremely short weld time and the localization of the weld which is made possible by the CD welding process, the heat treated areas outside the localized welding zone will not be adversely affected by the welding process. As described above, in the past it was not considered feasible to weld to members such as the body herein, which are high in carbon and nitrogen as the result of heat treating, because the welding process resulted in decomposition of the carbon and nitrogen. In using the present process, however, no such decomposition has been observed. When the weld process is completed, the assembly is tempered in accordance with accepted practices which are well known in the art.

Referring to **Fig. 6**, it can be observed that the heat affected zone, designated A, of the welded tappet assembly shows a fine, crystalline martensitic microstructure, which is necessary to obtain a high weld strength.

Upon completion of the body assembly, the hydraulic assembly is inserted into the web and hub assembly **14** to complete the hydraulic tappet assembly **10** as shown in **Fig. 1**.

## Claims

1. A method for manufacturing a direct acting hydraulic tappet (10) comprising the steps of forming a generally cup-shaped body member (12); forming a circumferential groove (28) in the outer wall of said body member, said groove-forming process deflecting the material interior of said body member to a predetermined shape; heat treating said body; locating a web and hub element (14) against said predetermined shape, the periphery of the web portion of said web and hub element (14) and said predetermined shape defining a weld interface; and welding said web and hub element (14) to said body member (12) by a localized welding process applied in the area of said interface; characterized by said groove (28) being formed by mounting said body member (12) on a rotating mandrel (34') with the inner bottom face (44) of said body member located against the end of the mandrel, said mandrel having a diameter slightly less than the internal diameter of the cup shaped body member, and said mandrel having a depression formed therein corresponding to said predetermined shape and positioned a predetermined distance form the end of said mandrel (34'), and contacting the outer wall of said body member (12) with a groove forming tool (40'), the axial position of said groove forming tool relative to said body member also being measured from the end of said mandrel (34').

2. A method as claimed in claim 1 in which said predetermined shape comprises a surface formed in the inside wall of said body member (12) which defines an angle between 42 degrees and 46 degrees to a line parallel to the longitudinal axis of said body member, said surface defining said weld interface.

3. A method as claimed in claim 2 in which said surface is bounded by a first radius (R1) between 6.35 mm and 19.05 mm convex to the interior of said body member and a second radius (R2) between 19.05 mm and 31.75 mm concave to the interior of said body member.

4. A method as claimed in claims 1, 2 or 3 in which said localized welding process is a capacitive discharge process.

5. A method as claimed in any one of claims 1-4 including the steps of press fitting a thin-walled baffle member (50) onto the hub portion of said web and hub element (14) to a predetermined position along the longitudinal axis of said hub portion prior to locating said web and hub element against said predetermined shape, said baffle member being repositioned on said hub portion by said locating step to located an end of said baffle member against the inner bottom face (44) of said body member (12).

## Patentansprüche

1. Verfahren zur Herstellung eines direkt-wirkenden Hydraulikstössels (10), welches folgende Schritte aufweist: Bilden eines im allgemeinen tassenförmigen Körpergliedes (12); Bilden einer Unmfangsnut (28) in der Außenwand des Körpergliedes, wobei der Nut-Formungsprozeß das Material innerhalb des Körpergliedes in eine vorbestimmte Form biegt; Wärmebehandlung des Körpers; Anordnen eines Steg- und Nabenelements (14) gegen eine vorbestimmte Form, wobei der Umfang des Stegteils des Steg- und Nabenelementes (14) und die vorbestimmte Form eine Schweißschnittstelle definieren; und Schweißen des Steg- und Nabenelementes (14) an das Körperglied (12) durch einen konzentrierten bzw. örtlichen Schweißprozeß, der im Bereich der Schnittstelle angewandt wird,
dadurch **gekennzeichnet**, daß die Nut (28), durch die Montage des Körpergliedes (12) auf einem sich drehenden Dorn (34) gebildet wird, wobei die innere Bodenstirnseite (44) des Körpergliedes gegen das Ende des Dornes angeordnet ist, wobei der Dorn einen geringfügig kleineren Durchmesser als der Außendurchmesser des tassenförmigen Körpergliedes besitzt, und wobei der Dorn eine Einsenkung darin ausgebildet hat, die der vorbestimmten Form entspricht, und die um einen vorbestimmten Abstand vom Ende des Dornes (34) positioniert ist, und daß ein Berühren der Außenwand des Körpergliedes (12) mit einem Nut-Formungswerkzeug (40') erfolgt, wobei die Axialposition des Nut-Formungswerkzeuges relativ zum Körperglied auch vom Ende des Dorns (34') gemessen wird.

2. Verfahren nach Anspruch 1, bei dem die vorbestimmte Form eine Oberfläche aufweist, die in der Innenwand des Körperglieds (12) ausgebildet ist, die einen Winkel zwischen 42° und 46° bezüglich einer Linie parallel zur Längsachse des Körpergliedes definiert, wobei die Oberfläche die Schweißschnittstelle definiert.

3. Verfahren nach Anspruch 2, bei dem die Oberfläche durch einen ersten Radius (R1) zwischen 6,35 mm und 19,05 mm konvex zum Inneren des Körpergliedes und durch einen zweiten Radius (R2) zwischen 19,05 mm und 31,75 mm konkav zum Inneren des Körperglieds begrenzt wird.

4. Verfahren nach den Ansprüchen 1, 2 oder 3, bei dem der örtliche bzw. konzentrierte Schweißprozeß ein kapazitiver Entladungsprozeß ist.

5. Verfahren nach einem der Ansprüche 1 bis 4, welches folgende Schritte aufweist: Preßpassung eines dünnwandigen Ablenkplattengliedes (50) auf den Nabenteil des Steg- und Nabenelementes (14) auf eine vorbestimmte Position entlang der Längsachse des Nabenteils vor der Anordnung des Steg- und Nabenelementes gegen die vorbestimmte Form, wobei das Ablenkplattenglied auf dem Nabenteil durch den Anordnungsschritt erneut positioniert wird, um ein Ende des Ablenkplattengliedes gegen die innere Bodenstirnseite (44) des Körperglieds (12) anzuordnen.

## Revendications

1. Méthode de fabrication d'un poussoir hydraulique à action directe (10), comprenant les phases suivantes: la phase de réalisation d'un corps (12) généralement en forme de coupelle ; de réalisation d'une gorge circonférentielle (28) sur la paroi extérieure dudit corps, le procédé de réalisation de cette gorge déformant l'intérieur dudit corps pour obtenir une forme prédéterminée ; la phase de traitement thermique dudit corps ; la phase de mise en place d'un élément collerette-moyeu (14) contre ladite forme prédéterminée, le contour de la partie collerette dudit élément collerette-moyeu (14) et ladite forme prédéterminée définissant ensemble une interface de soudure ; enfin, la phase de soudage dudit élément collerette-moyeu (14) sur ledit corps (12) par un procédé de soudage localisé dans la zone de ladite interface ; méthode caractérisée par le fait
que ladite gorge (28) est formée par montage dudit corps (12) sur un mandrin tournant (34'), la face inférieure interne (44) dudit corps étant en butée contre l'extrémité du mandrin, ledit mandrin ayant un diamètre légèrement inférieur au diamètre intérieur du corps en forme de coupelle et une dépression correspondant à ladite forme prédéterminée et située à une distance prédéterminée de l'extrémité dudit mandrin (34'), et mettant en contact la paroi externe du corps (12) avec un outil à gorge (40') dont la position axiale par rapport au corps est également mesurée à partir de l'extrémité dudit mandrin (34').

2. Méthode selon la revendication 1, caractérisée en ce
que ladite forme prédéterminée comprend une surface, formée sur la paroi interne du corps (12), qui définit un angle de 42 degrés à 46 degrés par rapport à une ligne parallèle à l'axe longitudinal dudit corps, ladite surface définissant ladite interface de soudure.

3. Méthode selon la revendication 2, caractérisée en ce
que ladite surface est limitée par un premier rayon (R1) de 6,35 mm à 19,05 mm convexe vers l'intérieur dudit corps et par un second rayon (R2) de 19,05 mm à 31,75 mm concave vers l'intérieur dudit corps.

4. Méthode selon la revendication 1, 2 ou 3, caractérisée en ce
que ledit procédé de soudage localisé est un procédé par décharge capacitive.

5. Méthode selon l'une quelconque des revendications 1 à 4, caractérisée par le fait
qu'elle comprend les phases de montage à la presse d'un élément chicane à paroi fine (50) sur la partie moyeu dudit élément collerette-moyeu (14) dans une position prédéterminée sur l'axe longitudinal de ladite partie moyeu avant la mise en place dudit élément collerette-moyeu contre ladite forme prédéterminée, ledit élément chicane étant repositionné sur ladite partie moyeu par ladite phase de positionnement afin de placer une extrémité dudit élément chicane contre la face inférieure interne (44) dudit corps (12).
